# EUROPEAN PATENT APPLICATION

(11) **EP 4 597 206 A1**
(43) Date of publication of application: **06.08.2025**
(21) Application number: 24797444.7
(22) Date of filing: 25.04.2024
(51) Int. Cl.: G02B 27/01, G02B 27/09, G02B 5/32, B60K 35/00, B60K 35/23

(54) **HEAD-UP DISPLAY**

(30) Priority: 26.04.2023 KR 20230054938
(71) Applicant: LG Electronics Inc., Yeongdeungpo-gu Seoul 07336 (KR)
(72) Inventor: LEE, Bosun, Seoul 06772 (KR); KIM, Kyunglack, Seoul 06772 (KR); KIM, Dongwook, Seoul 06772 (KR); LEE, Seonho, Seoul 06772 (KR); AHN, Jisun, Seoul 06772 (KR); LEE, Changhun, Seoul 06772 (KR)
(74) Representative: Vossius & Partner Patentanwälte Rechtsanwälte mbB
(86) International application number: PCT/KR2024/005632
(87) International publication number: WO 2024/225790

(57) **Abstract**

A head-up display according to the present embodiment includes: an image generation device from which image light is emitted; a plate spaced apart from the image generation device; and a holographic optical element that is disposed on the plate to reflect, toward the windshield, the image light emitted from the image generation device.

## Description

### [Technical Field]

The present disclosure relates to a head-up display that can be installed in a vehicle.

### [Background Art]

A head-up display is a device installed in a vehicle that projects image light toward the windshield of the vehicle. A head-up display can display various information, including driving information, while the vehicle is driving.

A head-up display includes a display panel that generates and outputs image light, and at least one mirror that reflects the image light generated by the display panel.

The image light generated from the display panel can be incident on the vehicle's windshield by a mirror, and the driver can perceive a virtual image of the location in front of the windshield.

Korean Patent Publication No. 10-2433513 B1 (published on August 18, 2022) discloses a test device for a head-up display using a holographic optical element, in which a laser beam emitted from a light source is irradiated on a holographic optical element attached to a windshield to cause a virtual image to appear.

### [Disclosure]

### [Technical Problem]

An object of the present embodiment is to provide a head-up display capable of minimizing brightness loss and minimizing volume.

### [Technical Solution]

A head-up display according to the present embodiment may include a picture generation unit that emits image light; a plate spaced apart from the picture generation unit; and a holographic optical element disposed on the plate to reflect the image light emitted from the picture generation unit toward a windshield.

The holographic optical element may be an off-axis reflective diffraction optical element.

The first modification of the head-up display may further include a flat mirror that reflects image light reflected from the holographic optical element toward a windshield.

The holographic optical element may include a first holographic optical element that reflects image light emitted from the picture generation unit, and a second holographic optical element that reflects image light reflected from the first holographic optical element toward a windshield.

The holographic optical element may be an off-axis reflective diffraction optical element. The head-up display may further include a second holographic optical element disposed between the holographic optical element and the windshield and through which image light reflected by the holographic optical element is transmitted. The holographic optical element and the second holographic optical element may be not parallel.

The holographic optical element may include a plurality of areas having different reflection angles, and the picture generation unit may emit image light to each of the plurality of areas.

The present embodiment may include a picture generation unit from which image light is emitted; a plate spaced apart from the picture generation unit; a holographic optical element which is disposed on the plate and through which image light emitted from the picture generation unit is transmitted; and a mirror that reflects the image light transmitted through the holographic optical element to the holographic optical element, in which the image light reflected from the mirror may be reflected onto a windshield by the holographic optical element.

The plate may be a transparent medium.

The holographic optical element may be an off-axis reflective diffraction optical element.

### [Advantageous Effect]

According to this embodiment, the volume can be minimized, and since the holographic optical element reflects the image light, brightness loss can be minimized more than when a transmissive holographic optical element is applied.

### [Description of Drawings]

FIG. 1 is a side view illustrating a first example of a head-up display according to the present embodiment;
FIG. 2 is a side view illustrating a first modified example of a first example of a head-up display according to the present embodiment;
FIG. 3 is a side view illustrating a second modified example of the first example of a head-up display according to the present embodiment;
FIG. 4 is a side view illustrating a second example of a head-up display according to the present embodiment;
FIG. 5 is a side view illustrating a third example of a head-up display according to the present embodiment;
FIG. 6 is a side view illustrating a fourth example of a head-up display according to the present embodiment;
FIG. 7 is a side view illustrating a fifth example of a head-up display according to the present embodiment;
FIG. 8 is a side view illustrating a sixth example of a head-up display according to the present embodiment.

### [Best Mode]

Hereinafter, specific embodiments of the present disclosure will be described in detail with reference to the drawings.

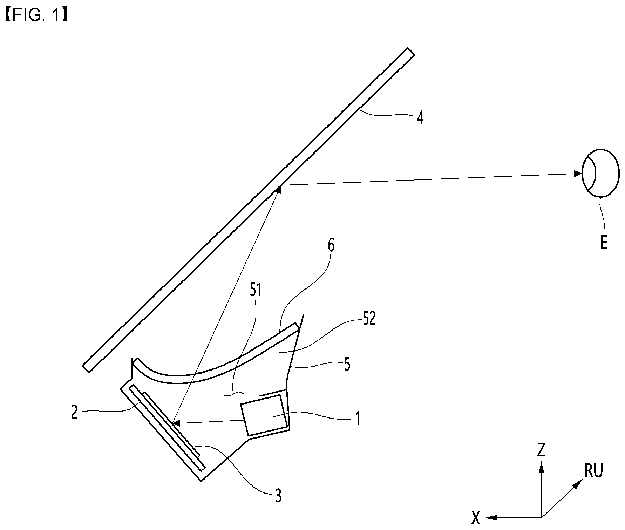

FIG. 1 is a side view illustrating a first example of a head-up display according to the present embodiment.

A first example of a head-up display may include a picture generation unit 1, a plate 2, and a holographic optical element 3, as illustrated in FIG. 1, and may provide information to a driver (E, eye box) through a windshield 4.

The windshield 4 may be a windshield of a vehicle, and the driver (E, eye box) may recognize information through the windshield 4.

A picture generation unit (PGU) 1 can emit image light. The picture generation unit 1 can include a display panel and a plurality of lenses.

Examples of picture generation units 1 that can be used include light sources such as LCD, DLP, and laser.

The plate 2 can be spaced apart from the windshield 4 in the upper and lower direction Z on the lower side of the windshield 4. The plate 2 can support a holographic optical element 3. The plate 2 can be a holographic optical element fixing plate to which the holographic optical element 3 is fixed.

Examples of plates 2 may be glass or plastic.

The plate 2 may not be parallel to the windshield 4. The plate 2 may be disposed at an angle different from that of the windshield 4.

The rear surface of the plate 2 can face the inclined direction RU of the rear upper side.

The rear surface of the plate 2 may be a fixed surface for fixing the holographic optical element 3.

The plate 2 can be spaced apart from the picture generation unit 1. The plate 2 can be spaced apart from the picture generation unit 1 in the front and rear direction X.

A holographic optical element 3 is disposed on a plate 2 and can reflect image light emitted from a picture generation unit 1 toward a windshield 4.

The front surface of the holographic optical element 3 may face the rear surface of the plate 2, and the rear surface of the holographic optical element 3 may face the emission surface of the picture generation unit 1 and the windshield 4.

The holographic optical element 3 may be a Holographic Optical Element (HOE), and examples of the holographic optical element 3 may be HOE glass or HOE film.

The holographic optical element 3 may be an off-axis optical element. The axis of the image light incident on the picture generation unit 1 may be bent by the holographic optical element 3.

The holographic optical element 3 may be a reflective diffraction optical element. Image light incident on the picture generation unit 1 may be magnified while being reflected by the holographic optical element 3.

Image light incident on the picture generation unit 1 can be bent by the holographic optical element 3 at an angle exceeding 180° and less than 270° with respect to the axis.

If the holographic optical element 3 is a transmissive optical element, the holographic optical element 3 is fixed to a base substrate such as glass. In this case, the image light inevitably transmits through the holographic optical element 3 and the base substrate, and brightness loss due to the base substrate may be large.

When the holographic optical element 3 is a transmissive optical element, ghost images may occur and image quality may deteriorate due to stray light transmitting through the holographic optical element 3.

On the other hand, if the holographic optical element 3 is a reflective diffraction optical element, brightness loss can be minimized and deterioration of image quality can be minimized compared to a transmissive optical element.

When the holographic optical element 3 is a reflective diffraction optical element, a separate reflective mirror such as a concave mirror on the optical path can be minimized, and the volume of the head-up display can be minimized.

A preferred example of a holographic optical element 3 may be an off-axis reflective diffraction optical element.

Image light incident on a holographic optical element 3 may be reflected and magnified so that the incident angle is not the same as the emission angle.

The internal area of the holographic optical element 3 can be recorded as needed by grating using a laser or the like, and the reflection angle and magnification ratio can be determined by the grating.

The incident angle and reflection angle of the holographic optical element 3 can be set by optimizing the grating.

The plate 2 and the holographic optical element 3 can be angled relative to the windshield 4 in the direction of the driver.

When the angle of the plate 2 is changed, the angle of the holographic optical element 3 can be changed.

The plate 2 and the holographic optical element 3 can be inclined in the opposite direction to the windshield 4. The holographic optical element 3 can be inclined at an angle of 50° or more in the opposite direction to the windshield 4.

The plate 2 and the holographic optical element 3 can be tilted at a predetermined angle with respect to the vertical line.

When the windshield 4 is at an angle of 65° with respect to the vertical line, the holographic optical element 3 can be tilted at an angle of 140° or more with respect to the vertical line to minimize light reflection due to sunlight.

When the windshield 4 is at an angle of 70° with respect to the vertical line, the holographic optical element 3 can be tilted at an angle of 145° or more with respect to the vertical line to minimize light reflection due to sunlight.

The holographic optical element 3 can be used as a lens, and back-reflection due to sunlight can be minimized.

A first example of a head-up display may have a picture generation unit 1, a holographic optical element 3, and an optical path leading to a windshield 4.

A first example of a head-up display is a head-up display in which image light generated from a picture generation unit 1 is incident on a holographic optical element 3, and then reflected and magnified by the holographic optical element 3, and can be directed from the holographic optical element 3 to a windshield 4, and the driver (E, eye box) can recognize the image light through the windshield 4.

The first example of a head-up display may further include a housing 5 (or case) forming the outer appearance of the head-up display.

A space 51 may be formed inside the housing 5. An opening 52 may be formed in the upper part of the housing 5.

The picture generation unit 1, the plate 2 and the holographic optical element 3 can be accommodated in a space 51.

The first example of the head-up display may further include a dust cover 6 that shields the opening 52. The dust cover 6 may have a concave shape. The dust cover 6 may have a shape that is recessed downward.

Image light reflected from the holographic optical element 3 can pass through the dust cover 6 and head toward the windshield 4.

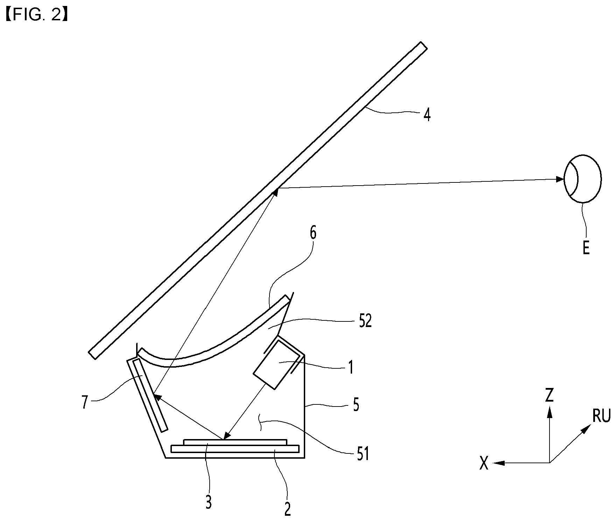

FIG. 2 is a side view illustrating a first modified example of a first example of a head-up display according to the present embodiment.

A first variation of the first example of the head-up display may further include a flat mirror 7, as illustrated in Fig. 2.

A flat mirror 7 can be accommodated in a space 51 of a housing 5 together with a plate 2 and a holographic optical element 3.

The holographic optical element 3 can reflect image light emitted from the picture generation unit 1 toward the flat mirror 7.

The flat mirror 7 may be a mirror whose incident angle and reflection angle are symmetrical.

A flat mirror 7 can reflect image light reflected from a holographic optical element 3 toward a windshield 4.

The flat mirror 7 can be spaced apart from the windshield 4 in the vertical direction Z on the lower side of the windshield 4.

The flat mirror 7 may not be parallel to the windshield 4. The flat mirror 7 may be disposed at a different angle relative to the windshield 4.

The rear surface of the flat mirror 7 may be a reflective surface, and the reflective surface may face the inclined direction RU of the rear upper side.

The flat mirror 7 can be spaced apart from the picture generation unit 1. The flat mirror 7 can be spaced apart from the picture generation unit 1 in the front and rear direction X.

A first variation of the first example of a head-up display may have an optical path including a picture generation unit 1, a holographic optical element 3, a flat mirror 7, and a windshield 4.

The holographic optical element 3 does not need to directly reflect image light to the windshield 4, and the arrangement angle thereof can be more free than that of the first example of the head-up display.

It is preferable that the holographic optical element 3 be positioned at an angle that can minimize the volume of the head-up display. The holographic optical element 3 can be positioned horizontally and long in the front and rear direction X.

The holographic optical element 3 may have an obtuse angle with respect to the flat mirror 7.

The plate 2 can be disposed horizontally and long in the front and rear direction X like a holographic optical element 3, and the holographic optical element 3 can be supported from the lower side of the holographic optical element 3.

A first variation of the first example of the head-up display further includes a flat mirror 7, and other configurations and operations other than the holographic optical element 3 reflecting image light to the flat mirror 7 may be the same as or similar to those of the first example of the head-up display illustrated in Fig. 1, and the same reference numerals are used and a detailed description thereof is omitted.

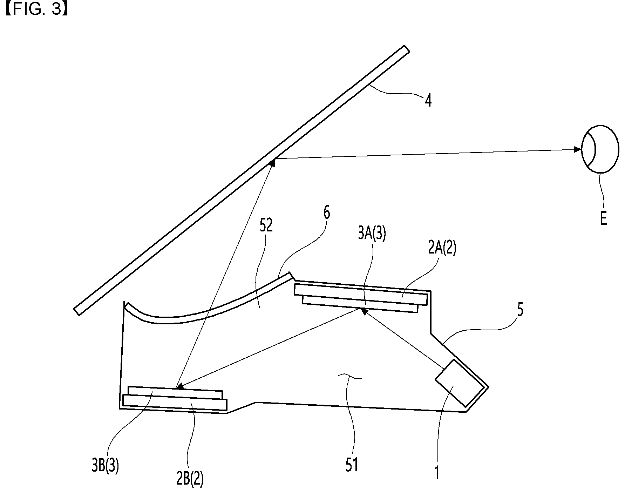

FIG. 3 is a side view illustrating a second modified example of the first example of a head-up display according to the present embodiment.

A second variation of the first example of the head-up display may be provided with a plurality of holographic optical elements 3. a pair of holographic optical elements 3 may be provided and may include a first holographic optical element 3A and a second holographic optical element 3B.

A second variation of the first example of the head-up display may be provided with a plurality of plates 2. The plates 2 may correspond 1:1 to the holographic optical element 3. A pair of plates 2 may be provided, and may include a first plate 2A and a second plate 2B.

The picture generation unit 1 can emit image light from the rear of the second holographic optical element 3B toward the first holographic optical element 3A.

The first holographic optical element 3A can reflect image light emitted from the picture generation unit 1.

The first holographic optical element 3A can be fixed to the first plate 2A. The first holographic optical element 3A can be placed on the lower surface of the first plate 2A.

The height of the first holographic optical element 3A may be different from the height of the second holographic optical element 3B. The height of the first holographic optical element 3A may be higher than the height of the second holographic optical element 3B.

The first holographic optical element 3A can be spaced apart from the windshield 4 in the vertical direction Z on the lower side of the windshield 4.

The first holographic optical element 3A may not be parallel to the windshield 4. The first holographic optical element 3A may be disposed at an angle different from that of the windshield 4.

The first holographic optical element 3A can be spaced apart from the picture generation unit 1. The first holographic optical element 3A can be disposed on the front upper side of the picture generation unit 1.

The second holographic optical element 3B can reflect the image light reflected from the first holographic optical element 3A toward the windshield 4.

The second holographic optical element 3B can be spaced apart from the windshield 4 in the vertical direction Z on the lower side of the windshield 4.

The second holographic optical element 3B can be separated from the picture generation unit 1.

The second holographic optical element 3B can be fixed to the second plate 2B. The second holographic optical element 3B can be placed on the upper surface of the second plate 2B.

The second holographic optical element 3B may not be parallel to the windshield 4. The second holographic optical element 3B may be disposed at an angle different from that of the windshield 4.

The second holographic optical element 3B can be disposed at the same angle as the first holographic optical element 3A.

The upper surface of the second holographic optical element 3B may not overlap with the lower surface of the first holographic optical element 3A.

Each of the first holographic optical element 3A and the second holographic optical element 3B may be identical to the holographic optical element 3 of the first example of the head-up display.

A second variation of the first example of the head-up display may have an optical path including a picture generation unit 1, a first holographic optical element 3A, a second holographic optical element 3B, and a windshield 4.

The second variation of the first example of the head-up display may have other configurations and operations that are the same or similar to those of the first example of the head-up display, except that they include the first holographic optical element 3A and the second holographic optical element 3B, and the same reference numerals are used and a detailed description thereof is omitted.

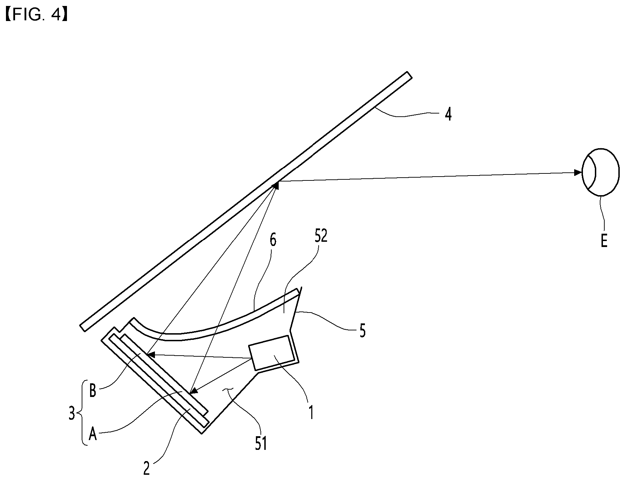

FIG. 4 is a side view illustrating a second example of a head-up display according to the present embodiment.

A second example of a head-up display may include a holographic optical element 3 including a plurality of areas A, B with different reflection angles.

The picture generation unit 1 can emit image light into each of a plurality of areas A, B. The image light emitted from the picture generation unit 1 can be dispersed and incident into the plurality of areas A, B.

One A of the plurality of areas A, B may be closer to the picture generation unit 1. Another (B) of the plurality of areas A, B may be closer to the windshield 4.

A holographic optical element 3 may include a pair of areas A, B, and may include a first area A and a second area B.

The first area A can be spaced apart from the picture generation unit 1 by a first distance, the second area B can be spaced apart from the picture generation unit 1 by a second distance, and the first distance can be smaller than the second distance.

The first area A can be spaced apart from the windshield 4 by a third distance, the second area B can be spaced apart from the windshield 4 by a fourth distance, and the third distance can be greater than the fourth distance.

Each of the first area A and the second area B may be an off-axis reflective diffraction optical area in which the incident and exit angles are asymmetric.

The exit angle of the second area B may be different from the exit angle of the first area A.

The first area A and the second area B may have different gratings recorded in the internal areas, and the first area A and the second area B may differ from each other in at least one of the reflection angle and magnification ratio.

The holographic optical element 3 can be formed with the first area A and the second area B together in one HOE film (or HOE glass).

It is also possible for the holographic optical element 3 to be formed on a pair of HOE films (or HOE glasses) each having a first area A and a second area B that are different from each other.

A second example of a head-up display may include a first optical path including a picture generation unit 1, a first area A of a holographic optical element 3, and a windshield 4, and a second optical path including a picture generation unit 1, a second area B of a holographic optical element 3, and a windshield 4, and may have a two-layer optical path.

The second example of a head-up display may have other configurations and operations that are identical or similar to those of the first example of a head-up display, except that the holographic optical element 3 includes a plurality of areas A, B with different reflection angles, and the same symbols are used and a detailed description thereof is omitted.

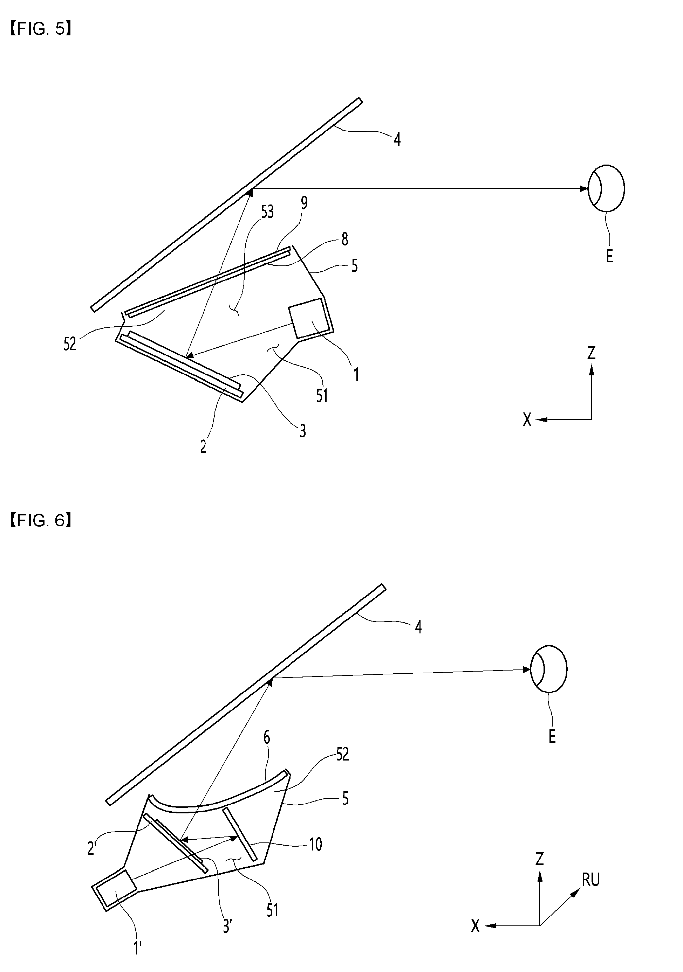

FIG. 5 is a side view illustrating a third example of a head-up display according to the present embodiment.

A third example of a head-up display may include a holographic optical element 3 and a second holographic optical element 8.

The picture generation unit 1 can be positioned in the area 53 between the holographic optical element 3 and the second holographic optical element 8 or behind the area 53 between the holographic optical element 3 and the second holographic optical element 8.

The holographic optical element 3 may be an off-axis reflective diffraction optical element and may be identical or similar to the holographic optical element 3 of the third example of the head-up display, and the same symbol is used and a description thereof is omitted.

The second holographic optical element 8 can be placed between the holographic optical element 3 and the windshield 4.

The image light reflected by the holographic optical element 3 can be transmitted through the second holographic optical element 8.

The second holographic optical element 8 may be a transmissive holographic optical element through which image light is transmitted, and examples of the second holographic optical element 3 may be HOE glass or HOE film. Image light incident on the holographic optical element 3 may be magnified while transmitting through the second holographic optical element 8.

The second holographic optical element 8 can be spaced apart from the windshield 4 in the upper and lower direction Z on the lower side of the windshield 4. The second holographic optical element 8 can form an angle with the windshield 4 and can minimize light reflection. The second holographic optical element 8 can have an acute angle of inclination with the windshield 4. The second holographic optical element 8 can be laid down closer to the horizontal than the windshield 4.

A pattern that can minimize distortion caused by the windshield 4 can be formed on the second holographic optical element 8.

The second holographic optical element 8 may include a pattern that minimizes light reflection.

If a pattern that minimizes light reflection is formed on the second holographic optical element 8, tilting of the holographic optical element 3 may be unnecessary. The holographic optical element 3 may be disposed horizontally.

The second holographic optical element 8 may be spaced apart from each of the picture generation unit 1 and the holographic optical element 3. The second holographic optical element 8 may not be parallel to the holographic optical element 3. The second holographic optical element 8 may form an angle with the holographic optical element 3. The second holographic optical element 8 may have an acute inclination angle with the holographic optical element 3.

The second holographic optical element 8 can be placed on a transparent second plate 9.

Examples of the second plate 9 may be glass or plastic.

The second holographic optical element 8 can be placed in the opening 52 of the housing 5, can cover the space 51 of the housing 5, and can replace the dust cover 6 illustrated in FIG. 1.

A third example of a head-up display may not include a separate dust cover 6.

FIG. 6 is a side view illustrating a fourth example of a head-up display according to the present embodiment.

A fourth example of a head-up display may include a picture generation unit 1', a plate 2', a holographic optical element 3' and a mirror 10.

The picture generation unit 1' can emit image light. The picture generation unit 1' can emit image light toward the holographic optical element 3'.

The picture generation unit 1' can be placed in front of the holographic optical element 3' or on the front lower side of the holographic optical element 3'.

The picture generation unit 1' may include a display panel and a plurality of lenses, and examples of the picture generation unit 1' may include a light source such as an LCD, DLP, or laser.

The plate 2' can be spaced apart from the picture generation unit 1. The plate 2' can be spaced apart from the picture generation unit 1 in the front and rear direction X.

The plate 2' may not be parallel to the windshield 4. The plate 2' may be disposed to be inclined at a different angle from the windshield 4.

The rear surface of the plate 2' can face the inclined direction RU of the rear upper side.

The rear surface of the plate 2' may be a fixing surface for fixing the holographic optical element 3'. The plate 2' may fix the holographic optical element 3', and the holographic optical element 3' may be supported on the plate 2'.

The plate 2' may be a transparent medium. Examples of the plate 2' may be glass or plastic.

A holographic optical element 3' can be placed on the plate 2'.

The image light emitted from the picture generation unit 1 can be transmitted through the holographic optical element 3'. The holographic optical element 3' can reflect the image light reflected by the mirror 10 to the windshield 4.

The front surface of the holographic optical element 3' can face the rear surface of the plate 2'.

The holographic optical element 3' may be a HOE (Holographic Optical Element), and examples of the holographic optical element 3 may be HOE glass or HOE film.

The holographic optical element 3' may be an off-axis reflective diffraction optical element.

The holographic optical element 3' can be a reflective or transmissive optical element.

The holographic optical element 3' may be a reflective and transmissive optical element that transmits image light incident on one side and reflects image light incident on the other side.

A holographic optical element 3' can be positioned between the picture generation unit 1' and the mirror 10.

The front surface of the holographic optical element 3' can face the picture generation unit 1', and the rear surface of the holographic optical element 3' can face the mirror 10.

The internal area of the holographic optical element 3' can be recorded with grating as needed using a laser or the like, and the front and rear surfaces can be formed with different patterns.

The front surface of the holographic optical element 3' can be recorded with a grating through which image light is transmitted, and the rear surface of the holographic optical element 3' can be recorded with a grating through which image light is reflected.

The plate 2' and the holographic optical element 3' can be angled relative to the windshield 4 in the direction of the driver.

When the angle of the plate 2' is changed, the angle of the holographic optical element 3' can be changed.

The plate 2' and the holographic optical element 3' can be inclined in a direction opposite to the windshield 4. The holographic optical element 3' can be inclined at an angle of 50° or more in a direction opposite to the windshield 4.

The plate 2' and the holographic optical element 3' can be tilted at a predetermined angle with respect to the vertical line.

The holographic optical element 3' can be used as a lens, and back-reflection due to sunlight can be minimized.

When the windshield 4 is at an angle of 65° with respect to the vertical line, the holographic optical element 3' can be tilted at an angle of 140° or more with respect to the vertical line to minimize light reflection due to sunlight.

When the windshield 4 is at an angle of 70° with respect to the vertical line, the holographic optical element 3' can be tilted at an angle of 145° or more with respect to the vertical line to minimize light reflection due to sunlight.

The mirror 10 can reflect the image light transmitted through the holographic optical element 3' back to the holographic optical element 3'.

The mirror 10 may be a reflective mirror that reflects image light to the holographic optical element 3'. An example of the mirror 10 may be a flat mirror.

Image light reflected from the mirror 10 can be re-reflected onto the windshield 4 by the holographic optical element 3'.

A fourth example of a head-up display may have an optical path including a picture generation unit 1', a plate 2', a holographic optical element 3', a mirror 10, the holographic optical element 3', and a windshield 4.

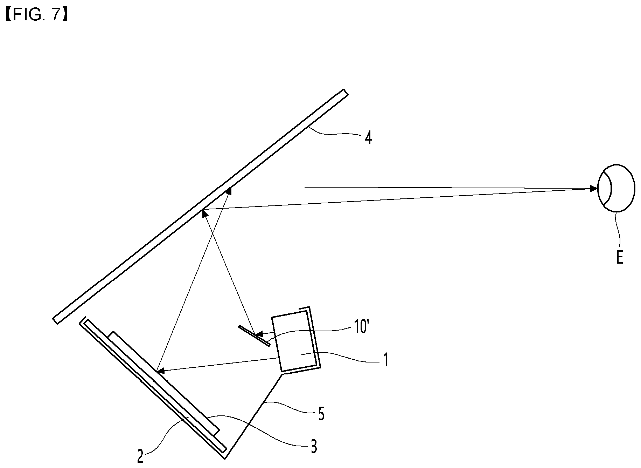

FIG. 7 is a side view illustrating a fifth example of a head-up display according to the present embodiment.

The fifth example of the head-up display may further include a flat head 10', and other configurations and operations other than the flat mirror 10' may be the same or similar to those of the first example of the head-up display, and the same symbols are used and detailed descriptions thereof are omitted.

A flat head 10' can be placed between the picture generation unit 1 and the holographic optical element 3.

The flat head 10' can reflect some of the image light emitted from the picture generation unit 1 to the windshield 4.

The remainder of the image light emitted from the picture generation unit 1 can be emitted toward the holographic optical element 3.

A fifth example of a head-up display may include a first optical path including a picture generation unit 1, a flat head 10' and a windshield 4, and a second optical path including the picture generation unit 1, a holographic optical element 3 and a windshield 4, and may have a two-layer optical path.

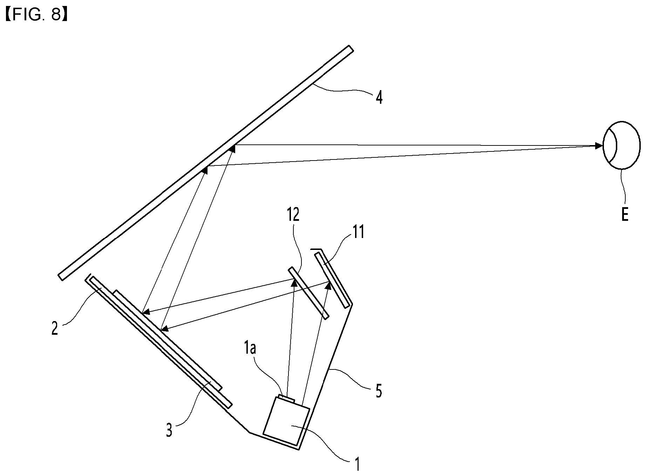

FIG. 8 is a side view illustrating a sixth example of a head-up display according to the present embodiment.

A sixth example of a head-up display may further include a retarder 1a, a flat head 11, and a selective transmission/reflection optical element 12, and other configurations and operations other than the retarder 1a, the flat head 11, and the selective transmission/reflection optical element 12 may be the same as or similar to those of the first example of the head-up display, and the same symbols are used and detailed descriptions thereof are omitted.

The retarder 1a may be positioned so as to face a portion of the emission surface of the picture generation unit 1. The retarder 1a may be positioned close to the emission surface of the picture generation unit 1.

The retarder 1a may be a phase retarder that converts the phase of the image light emitted from the picture generation unit 1. An example of the retarder 1a may be a half-wave plate HWP, and may convert the phase of the image light emitted from the picture generation unit 1 by half the wavelength.

For example, if the image light emitted from the picture generation unit 1 is a P wave, the image light of the S wave can be emitted from the retarder 1a. If the image light emitted from the picture generation unit 1 is an S wave, the image light of the P wave can be emitted from the retarder 1a.

The flat head 11 can be positioned apart from the picture generation unit 1 and the holographic optical element 3.

The flat head 11 can reflect image light to the holographic optical element 3 when image light is incident from the picture generation unit 1.

The selective transmission/reflection optical element 12 can be disposed to be spaced apart from the flat mirror 11. The selective transmission/reflection optical element 12 can reflect the image light emitted from the retarder 1a toward the holographic optical element 3. The selective transmission/reflection optical element 12 can selectively transmit and reflect the image light of the P wave and the image light of the S wave. The image light emitted from the retarder 1a and the image light emitted from the picture generation unit 1 but not passing through the retarder 1a can be incident on the selective transmission/reflection optical element 12.

The selective transmission/reflection optical element 12 can reflect image light emitted from the retarder 1a to the holographic optical element 3 and transmit image light emitted from the picture generation unit 1 and not passing through the retarder 1a.

An example of a selective transmission/reflection optical element 12 may be a polarizing reflective mirror, which can reflect light in a first direction and transmit light in a second direction orthogonal to the first direction.

For example, when the image light emitted from the picture generation unit 1 is the image light of the P wave, the image light of the S wave can be emitted from the retarder 1a, and the selective transmission/reflection optical element 12 can reflect the image light of the S wave to the holographic optical element 3 and allow the image light of the P wave to be transmitted. The image light of the P wave transmitted through the selective transmission/reflection optical element 12 can be reflected by the flat mirror 11 to the selective transmission/reflection optical element 12 and the holographic optical element 3.

Conversely, when the image light emitted from the picture generation unit 1 is the image light of the S wave, the image light of the P wave can be emitted from the retarder 1a, and the selective transmission/reflection optical element 12 can reflect the image light of the P wave to the holographic optical element 3 and allow the image light of the S wave to be transmitted. The image light of the S wave transmitted through the selective transmission/reflection optical element 12 can be reflected by the flat mirror 11 to the selective transmission/reflection optical element 12 and the holographic optical element 3.

The height of the selective transmission/reflection optical element 12 may be greater than or equal to the height of the holographic optical element 3.

The selective transmission/reflection optical element 12 can be closer to the picture generation unit 1 than the flat mirror 11.

The above description is merely an example of the technical idea of the present disclosure, and those skilled in the art will appreciate that various modifications and variations may be made without departing from the essential characteristics of the present disclosure.

Accordingly, the embodiments disclosed in the present disclosure are not intended to limit the technical idea of the present disclosure but are intended to explain the present disclosure, and the scope of the technical idea of the present disclosure is not limited by these embodiments.

The scope of protection of the present disclosure should be interpreted by the claims below, and all technical ideas within the equivalent scope thereof should be interpreted as being included in the scope of the rights of the present disclosure.

## Claims

1. A head-up display comprising:
a picture generation unit from which image light is emitted;
a plate spaced apart from the picture generation unit; and
a holographic optical element disposed on the plate to reflect the image light emitted from the picture generation unit toward a windshield.

2. The head-up display of claim 1,
wherein the holographic optical element is an off-axis reflective diffraction optical element.

3. The head-up display of claim 1, further comprising:
a flat mirror that reflects image light reflected from the holographic optical element toward a windshield.

4. The head-up display of claim 1,
wherein the holographic optical element including:
a first holographic optical element that reflects image light emitted from the picture generation unit, and
a second holographic optical element that reflects image light reflected from the first holographic optical element toward a windshield.

5. The head-up display of claim 1,
wherein the holographic optical element is an off-axis reflective diffraction optical element, and
the head-up display further comprising:
a second holographic optical element disposed between the holographic optical element and the windshield and through which image light reflected by the holographic optical element is transmitted.

6. The head-up display of claim 5,
wherein the holographic optical element and the second holographic optical element are not parallel.

7. The head-up display of claim 1,
wherein the holographic optical element includes a plurality of areas having different reflection angles, and
wherein the picture generation unit emits image light to each of the plurality of areas.

8. A head-up display comprising:
a picture generation unit from which image light is emitted;
a plate spaced apart from the picture generation unit;
a holographic optical element which is disposed on the plate and through which image light emitted from the picture generation unit is transmitted; and
a mirror that reflects the image light transmitted through the holographic optical element to the holographic optical element,
wherein the image light reflected from the mirror is reflected onto a windshield by the holographic optical element.

9. The head-up display of claim 8,
wherein the plate is a transparent medium.

10. The head-up display of claim 8,
wherein the holographic optical element is an off-axis reflective diffraction optical element.
